# DEMANDE DE BREVET EUROPEEN

(11) **EP 0 688 009 A1**
(43) Date de publication de la demande: **20.12.1995**
(21) Numéro de dépôt: 95401403.1
(22) Date de dépôt: 15.06.1995
(51) Int. Cl.: G09G 3/36, G02F 1/136

(54) **Ecran d'affichage à matrice active à commande multiplexée**

(30) Priorité: 17.06.1994 FR 9407449
(71) Demandeur: FRANCE TELECOM, F-75015 Paris (FR); Société SAGEM, F-75016 Paris (FR)
(72) Inventeur: Morin, Francois, F-75006 Paris (FR); Deffontaines, François, F-75012 Paris (FR)
(74) Mandataire: Dubois-Chabert, Guy

(57) **Abrégé**

Chaque transistor comprend deux grilles de commande (G1, G2). Les secondes grilles (G2) sont réunies entre elles le long d'une colonne ou d'une ligne d'adressage. Les colonnes ou lignes sont connectées entre elles par groupes de N. La commande des transistors d'une colonne ou d'une ligne est alors multiplexée par trois signaux de commande.

Application à l'affichage.

## Description

### Domaine technique

La présente invention a pour objet un écran d'affichage à matrice active à commande multiplexée. L'écran de l'invention peut être utilisé pour les téléviseurs, les ordinateurs, les tableaux de bord de véhicules (automobiles, avions, etc...).

### Etat de la technique

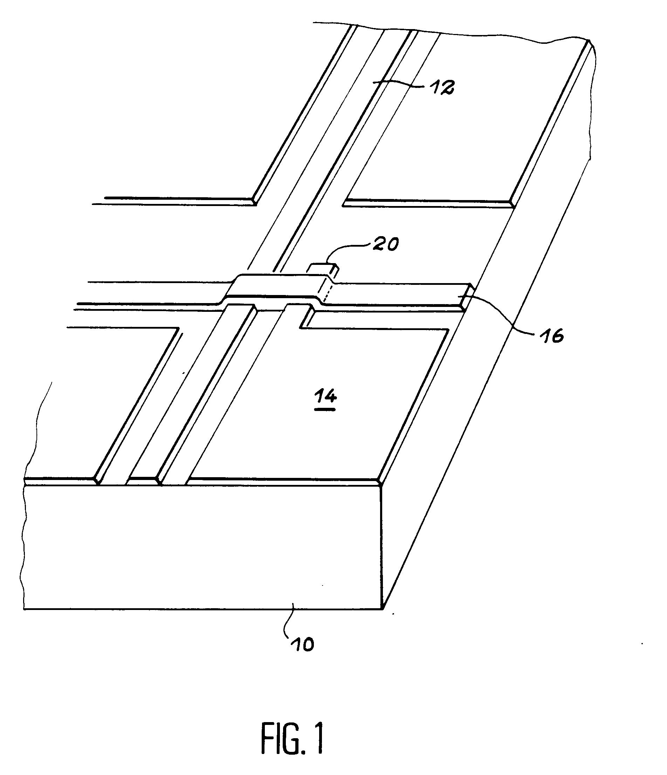

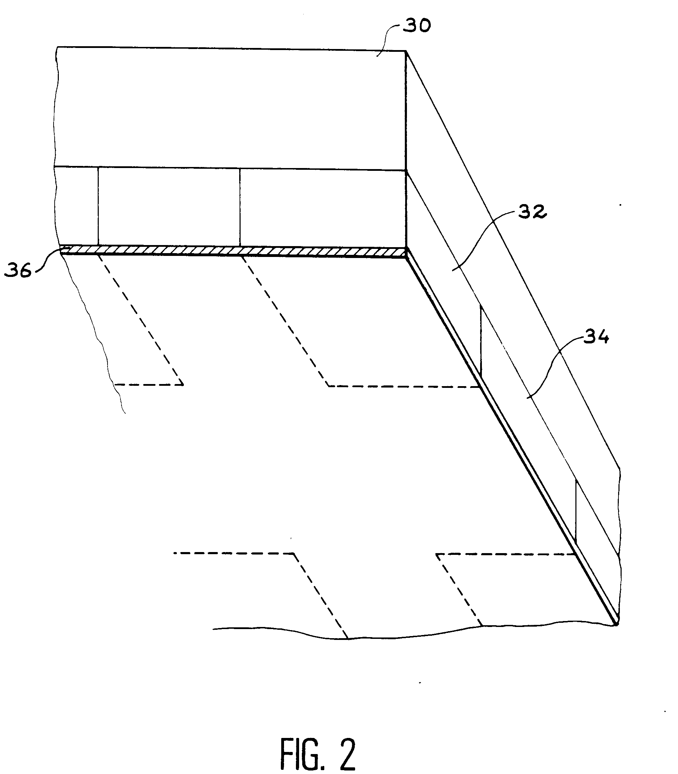

Un écran d'affichage comprend essentiellement deux plaques transparentes retenant entre elles un matériau électrooptique, par exemple un cristal liquide. Les figures 1 et 2 annexées montrent des exemples de réalisation de telles plaques.

Sur la figure 1, tout d'abord, on voit un substrat transparent 10, par exemple en verre, recouvert :
- d'une première famille de bandes conductrices d'adressage 12 disposées en colonnes, par exemple en oxyde d'étain et d'indium (ITO),
- d'une matrice d'électrodes 14 constituant chacune un point d'affichage ou pixel,
- et d'une seconde famille de bandes d'adressage 16 disposées en lignes et constituées généralement par un empilement de couches, à savoir une couche semiconductrice (par exemple en aSi:H), une couche isolante (par exemple en SiN) et une couche conductrice (par exemple en alumiminum).

Les électrodes 14 se prolongent par un doigt 20, de telle sorte que ce doigt et la colonne forment la source et le drain d'un transistor à couches minces TFT ("Thin Film Transistor" en terminologie anglo-saxonne), la grille étant constituée par la couche métallique de la ligne d'adressage.

Sur la figure 2, on voit une seconde plaque avec un second substrat transparent 30 (par exemple en verre), des pavés 32 de filtres colorés (rouge, vert, bleu), une grille noire (ou "Black Matrix") 34 et une contre-électrode 36 conductrice et transparente. Les filtres colorés 32 et la "Black Matrix" 34 ne sont pas essentiels dans l'invention qui va être décrite mais ils n'en sont pas moins utiles.

Un tel écran, ou tout au moins la première plaque illustrée sur la figure 1, peut être réalisé par un procédé ne nécessitant que deux niveaux de photolithogravure, comme décrit dans le document FR-A-2 533 072.

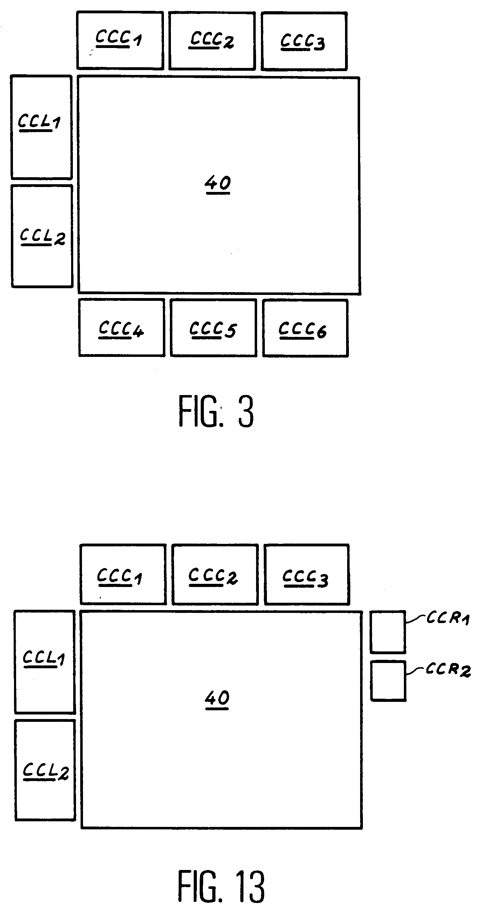

L'écran se complète par des circuits de commande disposés à la périphérie des plaques, comme illustré schématiquement sur la figure 3. Sur cette figure, on voit six circuits de commande de colonnes (appelés parfois "Drivers colonnes") référencés CCC1 à CCC6 et répartis le long des bords haut et bas de l'écran 40, et deux circuits de commande de lignes (appelés parfois "Drivers lignes") référencés CCL1 et CCL2 et disposés le long du bord gauche de l'écran. Chaque circuit de commande est apte à appliquer des tensions appropriées sur une pluralité de colonnes ou de lignes. En général, on applique successivement sur les lignes un signal de balayage vertical et sur les colonnes simultanément un signal vidéo.

Si ces dispositifs donnent satisfaction à certains égards, ils présentent néanmoins des inconvénients. En effet, les circuits intégrés périphériques nécessaires à la commande grèvent considérablement le coût de l'écran et, par ailleurs, augmentent sensiblement son encombrement.

La présente invention a justement pour but de remédier à ces inconvénients.

A cette fin, l'invention prévoit une disposition permettant de réduire le nombre des circuits de commande, en particulier le nombre de circuits de commande de colonnes. Pour cela, chaque transistor est muni d'une seconde grille de commande et toutes les secondes grilles des transistors appartenant, par exemple, à une même colonne d'adressage sont réunies entre elles. Ces colonnes de grilles sont réunies entre elles, une colonne sur N (N étant un entier au moins égal à 2). Les colonnes d'adressage sont par ailleurs reliées entre elles par groupes de N. Pour commander un transistor, il faut alors trois tensions de commande : une première tension appliquée à toutes les colonnes d'adressage d'un groupe, une deuxième tension appliquée à la seconde grille du transistor par la colonne de secondes grilles correspondante et, enfin, une troisième tension, appliquée sur la première grille par la ligne d'adressage.

Dans une telle commande, il y a donc multiplexage au niveau des signaux de colonne : il faut deux tensions colonnes pour commander correctement un transistor, l'une pour le groupe de colonnes auquel le transistor appartient, l'autre pour l'une des colonnes de secondes grilles de ce groupe.

Cette structure suppose naturellement que des circuits de commande des secondes grilles aient été prévus, ce qui semble aller à l'encontre du but recherché. Il faut comprendre cependant que l'on n'a besoin que de N circuits de ce type puisqu'il y a N colonnes de secondes grilles dans un même groupe de colonnes d'adressage, alors qu'en revanche, le nombre de circuits de commande des colonnes est divisé par N puisque ces colonnes ont été rassemblées par groupes de N. Or, ce second effet l'emporte largement sur le premier. En prenant par exemple N=2, il faudra ajouter deux circuits de commande des secondes grilles alors qu'on aura divisé par deux le nombre des circuits de commande de colonnes. Comme le nombre de colonnes est généralement grand (plus d'une centaine), la réduction obtenue grâce à la division par 2 l'emportera nettement sur l'ajout de deux circuits. Le bilan est donc largement positif.

Ce qui vient d'être dit peut être transposé immédiatement au cas où l'on rassemblerait non plus des colonnes par groupes de N mais des lignes. Le multiplexage se ferait alors sur les lignes et en plus sur les colonnes, mais le gain sur les circuits de commande serait le même (il toucherait alors le nombre de circuits de commande de lignes).

Les secondes grilles des transistors peuvent être obtenues par tout matériau conducteur déposé sur le substrat transparent et sous le transistor. Mais, selon un mode de réalisation préféré, ce matériau conducteur est, en même temps, opaque à la lumière ambiante, de sorte que chaque seconde grille constitue en même temps un masque optique protégeant le transistor de la lumière.

Il faut observer à cet égard que l'invention n'a pas pour objet de prévoir un masque optique sous des transistors, car cette disposition, en tant que telle, est déjà connue. On sait, en effet, que pour éviter qu'un éclairement trop intense vienne perturber le fonctionnement des transistors, il est connu de placer, sous chacun de ceux-ci, un masque opaque. Une telle technique est décrite par exemple dans l'article de TOMISHISA SUNATA et al., intitulé "A Large-Area Hig-Resolution Active-Matrix Color LCD Addressed by a-Si TFT's", publié dans la revue "Proceeding of the Society for Information Display (SID)", 27, (1986), n°3, pp. 229-233.

Ce masque est généralement constitué par une couche métallique opaque. Il a été reconnu qu'il se créait un second transistor mais ce transistor a toujours été considéré comme parasite. Si le masque est à un potentiel flottant, il peut se porter par influence à un potentiel positif et provoquer des courants de fuites qui sont néfastes au fonctionnement de l'écran.

On a pensé alors relier un tel masque à l'une des électrodes du transistor pour en fixer le potentiel. C'est ce qui est proposé par exemple dans le document EP-A-0 179 915.

On connaît par ailleurs, une autre solution, décrite dans EP-A-0 136 509, qui consiste à introduire sous les transistors à couches minces un masque optique passant partiellement sous le pixel. Le courant de fuite dans le transistor se trouve réduit et une capacité de stockage supplémentaire se trouve formée.

On connaît encore, par le document EP-A-0 564 337, un écran d'affichage dans lequel le masque optique est constitué d'autant de lignes conductrices opaques qu'il y a de lignes d'adressage, toutes ces lignes conductrices opaques étant réunies les unes aux autres et reliées à un contact apte à porter l'ensemble du masque optique à un potentiel de référence.

Dans toutes ces variantes connues à masque optique, jamais le masque ne sert de moyen de commande des transistors. Par ailleurs, les colonnes d'adressage ne sont pas groupées et reliées à un même circuit de commande, ce qui permet le multiplexage. L'utilisation du masque optique comme grille de commande du transistor dans le cadre d'un multiplexage n'avait donc jamais été imaginée par l'homme du métier.

### Exposé de l'invention

De façon précise, la présente invention a pour objet un écran d'affichage à matrice active à commande multiplexée comprenant :
- une première plaque comprenant un premier substrat transparent supportant une matrice d'électrodes commandée par une matrice de transistors, chaque transistor comprenant une source, un drain et une première grille ; une première famille de bandes conductrices d'adressage disposées en colonnes; une seconde famille de bandes conductrices d'adressage disposées en lignes, le drain et la source de chaque transistor étant reliés respectivement à une colonne d'adressage et à une électrode, la première grille étant connectée à une ligne d'adressage,
- des moyens de commande comprenant des circuits de commande aptes à appliquer aux bandes colonnes et aux lignes d'adressage des tensions appropriées,
- une seconde plaque comprenant un second substrat transparent revêtu d'une contre-électrode,

cet écran étant caractérisé par le fait que :
a) chaque transistor comprend une seconde grille placée en regard de la première,
b) toutes les secondes grilles des transistors correspondant à une bande d'adressage sur N sont électriquement connectées entre elles où N est un entier au moins égal à 2, (N groupes de secondes grilles étant ainsi constitués),
c) les bandes d'adressage consécutives (colonnes ou lignes) sont électriquement regroupées N par N, les N bandes d'un même groupe étant réunies à un même circuit d'adressage, le nombre de ces circuits d'adressage étant alors égal au nombre de bandes d'adressage (colonnes ou lignes) divisé par N,
d) les moyens de commande comprennent en outre N circuits de commande supplémentaires aptes à appliquer sur chacun des N groupes de secondes grilles des tensions appropriées en concordance avec les signaux appliqués sur les bandes d'adressage.

De préférence, les secondes grilles de transistors sont constituées par une couche conductrice fractionnée en N motifs électriquement isolés les uns des autres et imbriqués les uns dans les autres, chaque motif comprenant des bandes passant sous les transistors.

Dans un mode de réalisation simple, le nombre N est égal à 2.

Le matériau électro-optique inséré entre les deux plaques est de préférence un cristal liquide.

### Brève description des dessins

- la figure 1, déjà décrite, montre une première plaque d'un écran selon l'art antérieur ;
- la figure 2, déjà décrite, montre une seconde plaque selon l'art antérieur ;
- la figure 3, déjà décrite, montre schématiquement un écran avec ses circuits de commande périphériques selon l'art antérieur ;
- la figure 4 montre, en coupe, un transistor en couches minces à deux grilles ;
- la figure 5 est un schéma électrique équivalent de l'écran de l'invention ;
- la figure 6 illustre la variation de la tension de seuil d'un transistor à deux grilles en fonction de la tension appliquée sur la seconde grille ;
- la figure 7 montre le fractionnement du masque optique en deux parties interdigitées verticales, permettant le regroupement des colonnes deux par deux ;
- la figure 8 est le schéma électrique équivalent de cette variante ;
- la figure 9 montre le fractionnement du masque optique en deux parties interdigitées horizontales, permettant le regroupement des lignes deux par deux ;
- la figure 10 est le schéma électrique équivalent de cette autre variante ;
- la figure 11 montre les signaux de multiplexage colonne et le signal ligne ;
- la figure 12 montre les signaux de multiplexage ligne et le signal colonne ;
- la figure 13 montre un écran selon l'invention avec ses circuits de commande périphériques.

### Exposé détaillé de modes de réalisation

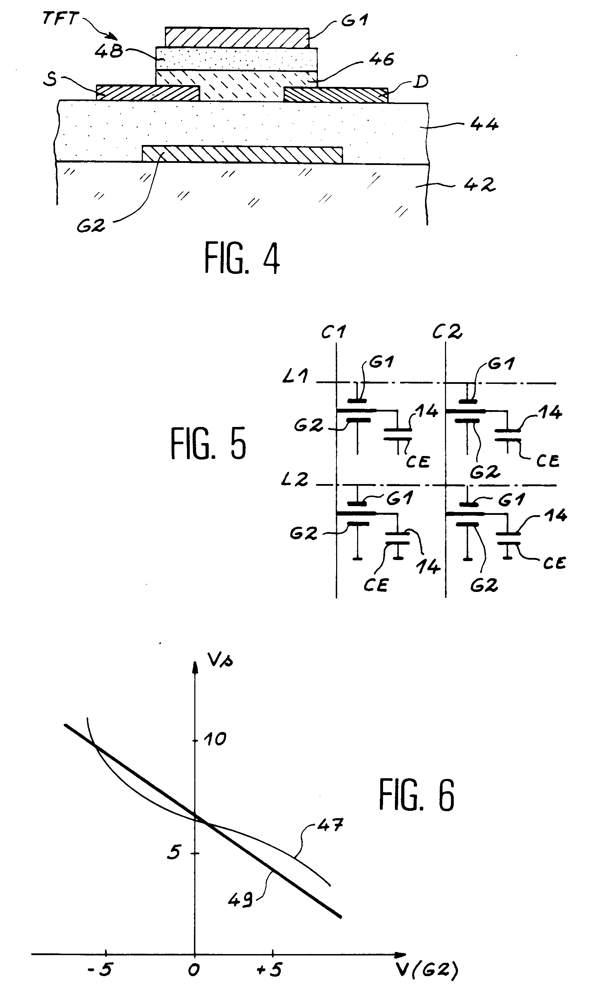

La figure 4 montre en coupe un transistor en couches minces à deux grilles. Sur un substrat 42 est déposée une grille inférieure, dite seconde grille et référencée G2, une première couche d'isolant 44, un drain D, une source S, une couche semiconductrice 46, une seconde couche d'isolant 48 et une grille supérieure dite première grille et référencée G1.

Tout procédé permettant de réaliser un tel transistor est utilisable. On retiendra, de préférence, le procédé à deux niveaux de photolithogravure décrit dans le document FR-A-2 533 072, complété par un troisième niveau apte à produire la seconde grille G2.

La figure 5 montre le schéma électrique équivalent, limité à quatre transistors. On y voit deux lignes d'adressage L1 et L2, deux colonnes d'adressage C1, C2, les condensateurs formés par les électrodes 14 et par la contre-électrode référencée CE. Les grilles G1 sont reliées aux lignes d'adressage et les grilles G2 à des connexions qui seront précisées par la suite.

Le potentiel de la deuxième grille G2 modifie les caractéristiques du transistor. La tension de seuil, qui est la tension de grille à partir de laquelle le transistor devient passant, se trouve déplacée sous l'effet de la tension appliquée à la seconde grille. La figure 6 montre les variations de cette tension de seuil Vs en fonction de la tension V(G2) appliquée à la seconde grille. La courbe 47 montre la variation mesurée et la droite 49 la variation linéaire approximative. On voit que la tension de seuil décroît lorsque la tension appliquée à la seconde grille croît. Pour une tension nulle appliquée sur G2, on retrouve un seuil d'environ 7,5 V qui est le seuil d'un transistor à une seule grille. Si on applique une tension très négative sur G2, on bloque le transistor jusqu'à au moins 10 V tandis que si l'on applique une tension positive, le seuil tombe à quelques Volts.

Dans la suite de la description, on supposera que l'entier N qui traduit l'ordre du multiplexage est égal à 2. En d'autres termes, les colonnes (ou les lignes) seront groupées deux par deux et les bandes de secondes grilles G2 seront reliées entre elles, une bande sur deux. Pratiquement, cela revient à réaliser sur le substrat une couche conductrice fractionnée en deux motifs, chaque motif comprenant des bandes verticales ou horizontales, les bandes d'un motif alternant avec celles de l'autre.

Naturellement, ce cas n'a rien de limitatif et l'invention couvre le cas général d'un nombre N quelconque.

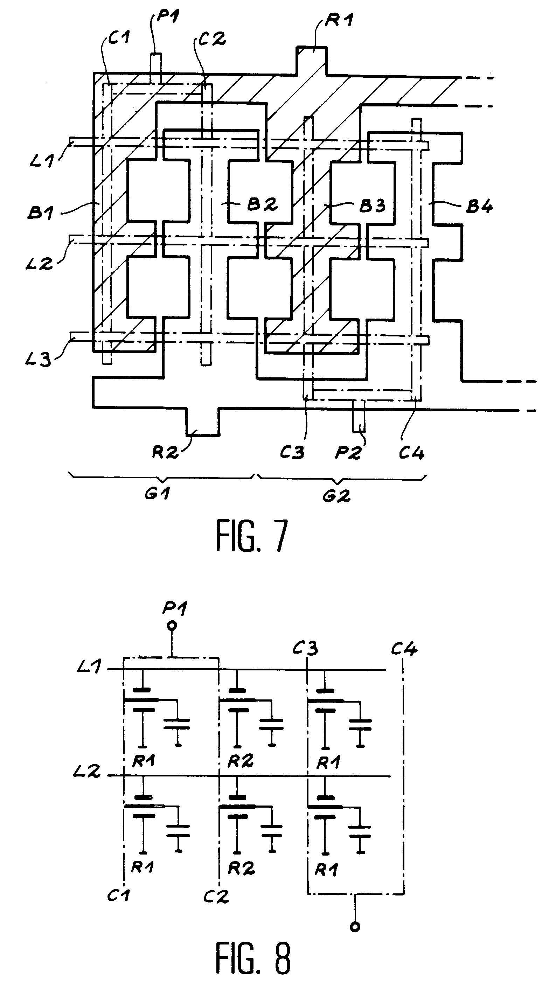

Sur la figure 7, le masque optique (zone hâchurée) est fractionné en deux motifs interdigités constituant les deux électrodes sur lesquelles on applique des potentiels différents. En appliquant un potentiel négatif sur une fraction du masque optique, on inhibe une partie des transistors de la matrice, par élévation de leur tension de seuil, tandis que l'autre partie des transistors sera normalement commandée. On connecte entre elles les colonnes de la matrice deux à deux pour diviser par deux le nombre d'accès de celle-ci, afin de diviser par deux le nombre de circuits de commande périphériques. Les colonnes C1, C2 sont ainsi réunies à un plot P1, les colonnes C3, C4 à un plot P2, etc...

Les secondes grilles des transistors correspondant à la première colonne C1 sont constituées par la bande B1 du motif du haut et les secondes grilles des transistors correspondant à la seconde colonne C2 sont constituées par la bande B2 du motif du bas, etc....

Le motif du haut est, par ailleurs, relié à un plot de connexion R1 et le motif du bas à un plot de connexion R2.

La figure 8 représente le schéma électrique équivalent dans le cas de cette variante. On y voit le groupement des colonnes deux par deux, et, dans chaque groupe, les transistors dont la seconde grille est portée au potentiel du plot R1 pour la première colonne et au potentiel du plot R2 pour la deuxième colonne.

Un potentiel négatif sur le plot R1 bloque les transistors des colonnes impaires (C1, C3, ...). Un potentiel positif sur le plot R2 abaisse le seuil des transistors des colonnes paires lesquels pourront être commandés par un signal ligne approprié.

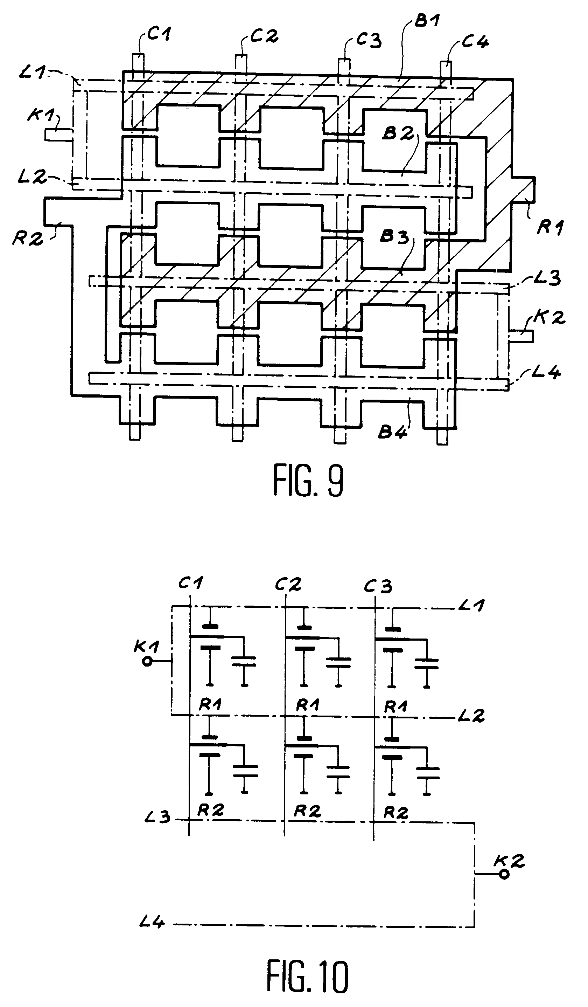

La figure 9 correspond à la figure 7 mais avec un groupement affectant les lignes et non plus les colonnes. Les lignes sont groupées deux par deux et chaque groupe est relié à un plot K1, K2.

Le masque optique est fractionné en deux motifs interdigités avec une partie droite reliée à un plot R1 et une partie gauche reliée à un plot R2.

La figure 10 montre le schéma électrique équivalent avec les groupes de lignes (L1, L2) (L3, L4) et la connexion des secondes grilles tantôt à R1, tantôt à R2 dans chaque groupe.

Un potentiel négatif sur le plot R1 bloque les transistors des lignes impaires (L1, L3, ...). Un potentiel positif sur le plot R2 abaissera le seuil des transistors des lignes paires, lesquels pourront être commandés par un signal ligne approprié.

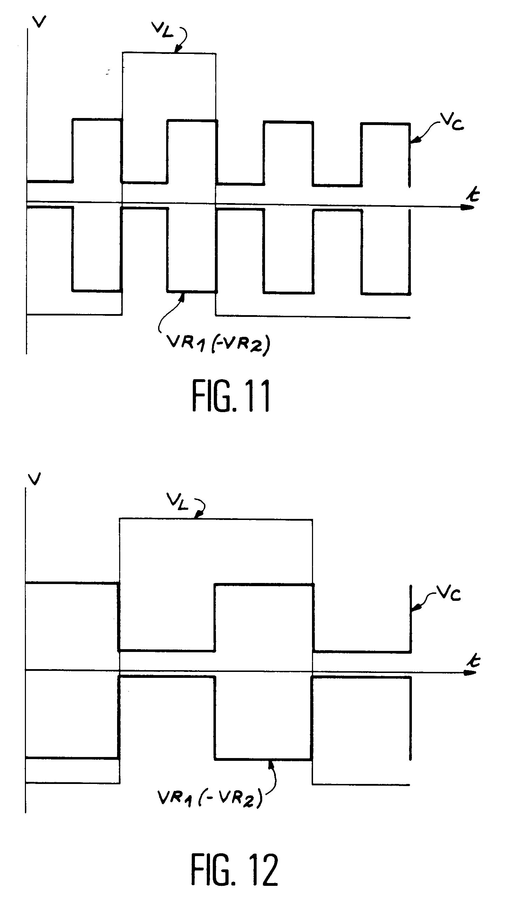

Les figures 11 et 12 sont des chronogrammes montrant les signaux de commande des deux configurations des figures 7 et 9, respectivement. Par souci de simplicité, on a considéré un mode de fonctionnement à potentiel de contre-électrode constant. Mais le principe s'applique au cas d'une contre-électrode à potentiel modulé.

Sur les figures 11 et 12, on voit ainsi le signal ligne V_{L}, le signal colonne V_{C} et le signal VR1 appliqué sur le plot R1, sachant que le signal VR2 appliqué sur le plot R2 est en opposition de phase avec VR1.

Pendant le temps d'accès ligne, chaque sortie du circuit de commande colonnes délivre deux tensions successives, respectivement pour le premier point et pour le second. Pendant la première partie de la période ligne, la tension VR1 appliquée sur R1 est faible et la seconde grille des transistors de la première colonne ne bloque pas les transistors. Dans le même temps, la tension VR2 (non représentée mais en opposition avec VR1) est forte et les transistors de la seconde colonne sont bloqués. Dans la deuxième partie du temps d'accès ligne la situation est inversée : transistors de la première colonne bloqués, transistors de la deuxième colonne débloqués.

La figure 12 montre le même type de chronogramme mais pour la configuration de la figure 9.

La figure 13 montre schématiquement un écran selon l'invention avec ses circuits de commande. Par rapport à la figure 3 (qui représentait un écran selon l'art antérieur), on retrouve les deux circuits de commande de lignes CCL1, CCL2 mais seulement la moitié des circuits de commande de colonnes, c'est-à-dire trois au lieu de six (CCC1 à CCC3). Par contre, on trouve deux circuits CCR1, CCR2 aptes à appliquer les tensions convenables aux plots R1 et R2 des deux motifs de l'électrode servant de masque optique. Cependant, ces circuits sont incomparablement plus simples que les circuits de commande de colonnes.

Pour illustrer encore les avantages de l'invention, on considère le cas d'un écran de 13 cm (5,1 pouces) pour des applications à l'automobile. Sa complexité est de 240 lignes de 320 pixels RVB, soit un quart du standard dit VGA (pour" Video Graphic Area"). Le pas des points est de 324 µm verticalement et 108 µm horizontalement. Il est réalisé en technologie à trois niveaux de masquage.

La plaque active est conforme à la figure 7 avec multiplexage des colonnes. Les colonnes sont connectées deux à deux : C1-C2, C3-C4, etc... Les plots d'accès P1, P2, etc... correspondants sont ménagés sur un seul côté (en haut) ; ils sont au pas double des points, soit 216 µm, ce qui est compatible avec une liaison standard au pas de 200 µm ou 180 µm. Les accès lignes sont au pas des points soit 324 µm. La cellule sera donc interconnectée sur deux côtés seulement.

## Revendications

1. Ecran d'affichage à matrice active à commande multiplexée comprenant :
- une première plaque comprenant un premier substrat transparent (10) supportant une matrice d'électrodes (14) commandée par une matrice de transistors (TFT), chaque transistor (TFT) comprenant une source, un drain et une première grille (G1) ; une première famille de bandes conductrices d'adressage disposées en colonnes (12) ; une seconde famille de bandes conductrices d'adressage disposées en lignes (16), le drain et la source de chaque transistor (TFT) étant reliés respectivement à une colonne d'adressage (12) et à une électrode (14), la première grille (G1) étant connectée à une ligne d'adressage (16),
- des moyens de commande comprenant des circuits de commande aptes à appliquer aux bandes colonnes et aux lignes d'adressage des tensions appropriées,
- une seconde plaque comprenant un second substrat transparent (30) revêtu d'une contre-électrode (36),
cet écran étant caractérisé par le fait que :
a) chaque transistor (TFT) comprend une seconde grille (G2) placée en regard de la première (G1),
b) toutes les secondes grilles des transistors (TFT) correspondant à une bande d'adressage sur N sont électriquement connectées entre elles où N est un entier au moins égal à 2, (N groupes de secondes grilles étant ainsi constitués),
c) les bandes d'adressage consécutives (colonnes ou lignes) sont électriquement regroupées N par N, les N bandes d'un même groupe étant réunies à un même circuit d'adressage, le nombre de ces circuits d'adressage étant alors égal au nombre de bandes d'adressage (colonnes ou lignes) divisé par N,
d) les moyens de commande comprennent en outre N circuits de commande supplémentaires aptes à appliquer sur chacun des N groupes de secondes grilles des tensions appropriées en concordance avec les signaux appliqués sur les bandes d'adressage,.

2. Ecran d'affichage selon la revendication 1, caractérisé par le fait que les secondes grilles (G2) sont constituées par une couche conductrice fractionnée en N motifs électriquement isolés les uns des autres et imbriqués les uns dans les autres, chaque motif comprenant des bandes passant sous les transistors.

3. Ecran d'affichage selon la revendication 2, caractérisé par le fait que les bandes de chaque motif sont parallèles aux colonnes d'adressage (12).

4. Ecran d'affichage selon la revendication 2, caractérisé par le fait que les bandes de chaque motif sont parallèles aux lignes d'adressage (16).

5. Ecran d'affichage selon l'une quelconque des revendications 1 à 4, caractérisé par le fait que l'entier N est égal à 2, la couche conductrice étant fractionnée en deux motifs interdigités, chaque motif passant sous les transistors d'une colonne ou d'une ligne d'adressage sur deux.

6. Ecran d'affichage selon la revendication 1, caractérisé par le fait que toutes les secondes grilles (G2) des transistors (TFT) sont réalisées en un matériau opaque, ces secondes grilles constituant ainsi, en outre, un masque optique protégeant le transistor.
